# EUROPEAN PATENT SPECIFICATION

(11) **EP 2 759 743 B1**
(45) Date of publication and mention of the grant of the patent: **12.08.2015**
(21) Application number: 14152352.2
(22) Date of filing: 23.01.2014
(51) Int. Cl.: F16H 37/04, F16H 1/14, B25J 9/10, F16H 49/00

(54) **Speed reducer**
Untersetzungsgetriebe
Réducteur de vitesse

(30) Priority: 28.01.2013 KR 20130009559
(43) Date of publication of application: 30.07.2014
(73) Proprietor: Yoon, Eunseok, Geumcheon-gu, Seoul 153-856 (KR)
(72) Inventor: Yoon, Eunseok, Geumcheon-gu, Seoul 153-856 (KR)
(74) Representative: Von Kreisler Selting Werner - Partnerschaft von Patentanwälten und Rechtsanwälten mbB

(56) References cited:
- US-A- 4 619 158
- US-A- 5 024 639
- US-A1- 2009 124 146
- US-A1- 2011 251 007

## Description

### Background of the Invention

### 1. Field of the Invention

The present invention relates generally to a speed reducer having a simple configuration, which is capable of precisely and reliably delivering the power to slow down.

### 2. Description of the Prior Art

US 2011/0251007 A discloses dual gear train driving structure at input side of basin-type gear of the present invention, the differential gear set input rocker arm driven by the basin-type bevel gear in the differential gear set assembly is made to be driven by two sets of transmissions, in which the first transmission transmits the rotary kinetic energy between the differential gear set input rocker arm and the engine, the second transmission transmits the rotary kinetic energy between the differential gear set input rocker arm and the second driving unit, and one or both of the transmissions drives the differential gear set input rocker arm.

US 2009/0124146 A discloses a speed reducer in accordance with the preamble of claim 1 (see fig. 4).

Generally, the speed reducer which has been conventionally widely used in related industries includes a pinion shaft that receives a power of the motor, a reduction gear that is integrally coupled to a one side of the pinion shaft, a ring gear meshing and rotating with the reduction gear, and a ring gear shaft for inducing the transmitted power to a drive shaft,

the ring gear shaft having a pin hole in which a pin is inserted so as to fix the ring gear shaft into the ring gear.

However, in the conventional speed reducer as described above, the output shaft of the speed reducer is coupled with the ring gear shaft by means of the pin so that the degree of coupling is not strong. Accordingly, it does not guarantee a smooth power transmission. Furthermore, when the speed reducer is operated for a long time, then the pin, the ring gear shaft and the output shaft, etc. cannot stand the rotational force and thereby resulting in frequent damage of these machine parts. As a result, it causes a failure of the reduction gear.

In general, the ring gear is fixed on the ring gear shaft by means of a key. Likewise, these ring gear and the ring gear shaft may be easily and frequently damaged due to the rotation force while the speed reducer is operated for a long time. This leads to occurrence of excessive maintenance costs for the speed reducer.

Meanwhile, since a rotational force may be transmitted through the output shaft of a one end of the driving shaft in the conventional speed reducer, the efficiency of power transfer is limited.

Furthermore, in the conventional speed reducer, since the output shaft is not rigidly fixed, the fluctuations and the uneven wear of the output shaft was terribly occurred, and thereby resulting in the limitation of the transfer of minute rotational force. Since most of the mechanical constitution is very complicate and the overall volume is large, it is hard to use in a system that requires a precise control such as joints of the robot and this leads to occurrence of excessive manufacturing costs.

### Summary of the Invention

In consideration of the above-mentioned disadvantages or inconveniences of the conventional techniques, an object of the present invention is to provide a speed reducer having a simple configuration, which is capable of precisely and reliably delivering the power to slow down, and which can be miniaturized and can operate stably without fluctuation.

Other object of the present invention is to provide a speed reducer can be widely applied because it can employ various gears such as a planet gear, a spur gear and a harmonic gear, etc. as the reduction gear for decelerating a rotational speed.

In order to achieve the objects, the present invention provides a speed reducer comprising:
a driving shaft driven by a driving means;
a pair of driving gears comprising a first driving gear and a second driving gear, in which the first driving gear and the second driving gear are installed at a one end of the driving shaft and are positioned facing each other, and the first driving gear and the second driving gear have a different size with the same gear ratio to the respective driven gear and comprise a bevel gear, respectively;
driven gears comprising a first driven gear and a second driven gear, which are positioned facing each other and making a pair, in which the first driven gear and the second driven gear are meshed with the first driving gear and the second driving gear, respectively and they comprise a bevel gear, respectively;
a driven shaft for supporting the first driven gear and the second driven gear, in which the driving shaft is installed at the driven shaft in a manner that it passes through a middle portion of the driven shaft; and
a rotational member for outputting the rotational force to slow down, the rotational member being coupled to the driven gear.

If the drive gears and the driven gears are configured to have different sizes as described above, they can be installed at one driving shaft so that they can be coupled to the driven shaft, respectively without interference with each other. As a result, it is possible to minimize the total size of the reduction gear and thereby resulting in manufacturing of the precision reduction gear. Since the driving force can be outputted from both sides of the driving shaft and it is transferred to one rotational member, the speed reducer can precisely and reliably deliver the power in a state that it may operate stably without fluctuation.

Since the driving gear rotates with the driving shaft as a unit and the driven shaft supports the driven gear, the driven gear may be idling-rotated on the driven shaft. Thus, although the driving shaft and the driven shaft intersect with each other, they do not give any hindrance in each of the power transmission.

An idle gear for supporting the other end of the driven gear is installed at the driving shaft and is positioned facing to the driving gear, in which the idle gear and the driving gear have a same size with the same gear ratio.

Preferably, the speed reducer further comprises an auxiliary speed reducing means installed at the outside of the driven gear.

The auxiliary speed reducing means comprises a sun gear installed at the driven gear, a planetary gear meshed with the sun gear, and a ring gear meshed with the planetary gear. Alternatively, the auxiliary speed reducing means comprises a combination of spur gears. Alternatively, the auxiliary speed reducing means comprises a harmonic gear. Any rotational force transmitted from the driving shaft may be outputted to slow down due to the operation of the auxiliary speed reducing means. The rotational member for outputting the driving force to slow down can be designed various types in accordance with applications. Preferably, the rotational member may be installed to the driven gear in a manner that it can rotate against the driven gear at 360 degrees. Alternatively, the rotational member is eccentrically mounted to the driven shaft in a manner that it can eccentrically rotate against the driven shaft in an eccentric state.

As described above, the speed reducer according to the present invention can precisely and reliably deliver the power to slow down and can operate stably without fluctuation by employing the gear system which is capable of changing the direction of the rotational force into a direction perpendicular to the original direction.

Since the speed reducer according to the present invention can employ various gears such as a planet gear, a spur gear and a harmonic gear, etc. as the reduction gear for decelerating a rotational speed, it can be widely applied.

Furthermore, the speed reducer according to the present invention can minimize the total size of the reduction gear, thereby resulting in the reduction of the manufacturing cost. Furthermore, the speed reducer according to the present invention can be applied in various fields that require miniaturization and refinement.

### Brief Description of the Drawings

The above objects and other characteristics and advantages of the present invention will become more apparent by describing in detail preferred embodiments thereof with reference to the attached drawings, in which:
FIG. 1 is an exterior perspective view of a speed reducer according to a preferred first embodiment of the present invention;
FIG. 2 is an exploded perspective view of the speed reducer as illustrated in FIG. 1;
FIG. 3 shows an external appearance of the speed reducer as illustrated in FIG. 1;
FIG. 4 shows an application state that the speed reducer as illustrated in FIG. 1 is installed at a robot joint;
FIG. 5 is a partial side sectional view of the speed reducer and the robot joint as illustrated in FIG. 4;
FIG. 6 is an exterior perspective view of the speed reducer according to the preferred first embodiment of the present invention, for showing a state that a fluctuation prevention means is installed at the speed reducer;
FIG. 7 is a sectional view of the robot joint employing the speed reducer as illustrated in FIG. 6;
FIG. 8 is a partial side sectional view of the speed reducer and the robot joint as illustrated in FIG. 7;
FIG. 9 is an exploded perspective view of a speed reducer according to another exemplarily embodiment of the present invention,
FIG. 10 is an exterior perspective view of a speed reducer according to a preferred second embodiment of the present invention;
FIG. 11 is an exploded perspective view of the speed reducer as illustrated in FIG. 10;
FIG. 12 is a partial side sectional view of the speed reducer and the robot joint, for showing an application state that the speed reducer as illustrated in FIG. 10 is installed at the robot joint;
FIG. 13 is an exterior perspective view of the speed reducer according to the preferred second embodiment of the present invention, for showing a state that a fluctuation prevention means is installed at the speed reducer;
FIG. 14 is an exploded perspective view of the speed reducer and the robot joint, for showing the application state that the speed reducer as illustrated in FIG. 12 is installed at the robot joint;
FIG. 15 is an exterior perspective view of a speed reducer according to a preferred third embodiment of the present invention;
FIG. 16 is an exterior perspective view of the speed reducer according to the preferred third embodiment of the present invention, for showing a state that a fluctuation prevention means is installed at the speed reducer;
FIG. 17 shows an external appearance of the speed reducer according to the preferred third embodiment of the present invention;
FIG. 18 is an exterior perspective view of the speed reducer and the robot joint, for showing the application state that the speed reducer according to the preferred third embodiment of the present invention is installed at the robot joint;
FIG. 19 is an exterior perspective view of a speed reducer according to a preferred fourth embodiment of the present invention;
FIG. 20 is an exploded perspective view of the speed reducer as illustrated in FIG. 19;
FIG. 21 is an exterior perspective view of the speed reducer according to the preferred fourth embodiment of the present invention, for showing a state that a fluctuation prevention means is installed at the speed reducer;
FIG. 22 shows an application state that the speed reducer as illustrated in FIG. 21 is installed at a robot joint; and
FIG. 23 is an exterior perspective view of the speed reducer and the robot joint, for showing the application state that the speed reducer according to the preferred fourth embodiment of the present invention is installed at the robot joint.

### Detailed Description of the Invention

Hereinafter, the constitution of the abalone habitat reef according to the present invention will be explained in more detail with reference to the accompanying drawings.

Prior to proceeding to the more detailed description of the preferred embodiments according to the present invention, it should be noted that, for the sake of clarity and understanding of the invention identical components which have identical functions have been identified with identical reference numerals throughout the different views which are illustrated in each of the attached drawing Figures.

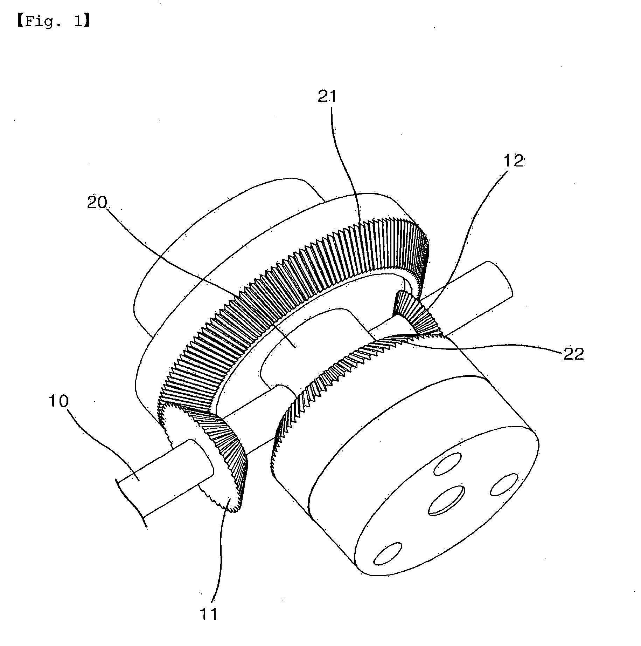

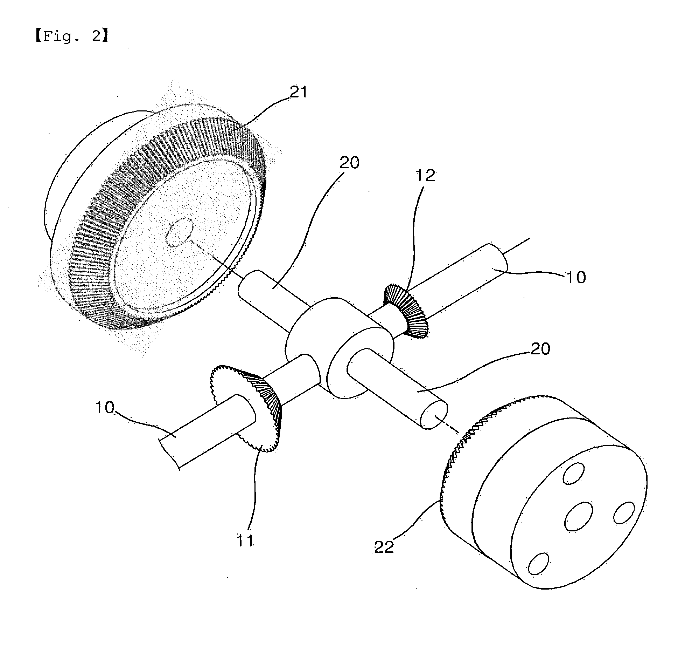

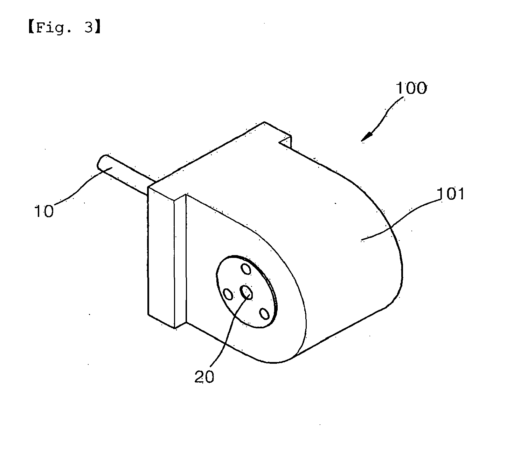

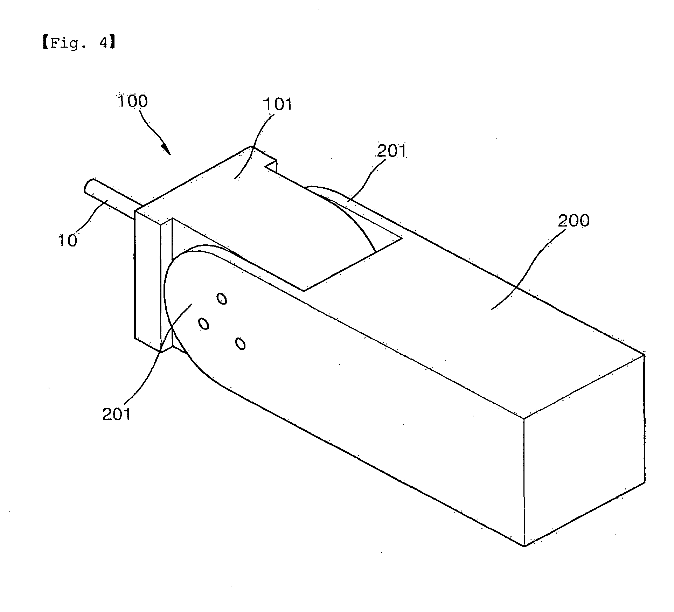

FIG. 1 is an exterior perspective view of a speed reducer according to a preferred first embodiment of the present invention, FIG. 2 is an exploded perspective view of the speed reducer as illustrated in FIG. 1, FIG. 3 shows an external appearance of the speed reducer as illustrated in FIG. 1, and FIG. 4 shows an application state that the speed reducer as illustrated in FIG. 1 is installed at a robot joint.

Referring to FIGS. 1 to 4, the speed reducer comprises a driving gear installed at a one end of a driving shaft 10 which rotates by receiving a driving force from a driving means such as a motor, an engine, etc. The speed reducer further comprises a driven gear for changing the direction of the rotational force of the driving gear into a direction perpendicular to the original direction. The driven gear is installed to the driving gear. As shown in the attached drawings FIG. 1 to FIG. 4, the driving gear and the driven gear comprises a bevel gear.

The driving gear includes a first driving gear 11 and the second driving gear 12, which are positioned on the driving shaft 10 facing each other with making a pair and are different from each other in size, and they have the same gear ratio.

The driven gear comprises a first driven gear 21 and a second driven gear 22, which are positioned on a driven shaft 20 facing each other with making a pair. The first driven gear 21 and the second driven gear 22 are meshed with the first driving gear 10 and the second driving gear 12, respectively. The first driven gear 21 and the second driven gear 22 are installed on the driven shaft 20 in a manner that they are arranged in a direction perpendicular to the driving shaft 10. Accordingly, the direction of the driven shaft 20 is perpendicular to the direction of the driving shat 10.

The driven shaft 20 comprises a non-rotating fixed shaft. The first driven gear 21 and the second driven gear 22 are installed on the driven shaft 20 in a manner that they can rotate about the driven shaft 20. Since the driving shaft 10 passes through a middle portion of the driven shaft 20, it is possible to reduce the total volume of the speed reducer.

Like the structure of the first driving gear 11 and the second driving gear 12, the first driven gear 21 and the second driven gear 22 have a different size and a same gear ratio. The first driven gear 21 is meshed with the first driving gear 11 and the second driven gear 22 is meshed with the second driving gear 12, respectively. Due to this gear system, the rotational force of the driving shaft 10 can be transmitted in the direction perpendicular to the direction of the driving shaft 10.

The speed reducer as described above can be designed as a speed reducer 100 which may be embedded in a case 101 as best shown in FIG. 3. The driving shaft 10 outwardly extends from a one surface of the speed reducer 100 so that it may be connected with a driving means. Side surfaces of the first driven gear 21 and the second driven gear 22 or a member for transmitting the rotational force of the driving shaft 10 may be mounted to both sides of the speed reducer 100. As shown in FIG. 4, a rotational member 200 to be rotated can be mounted to the connecting member or the surfaces of the first driven gear 21 and the second driven gear 22.

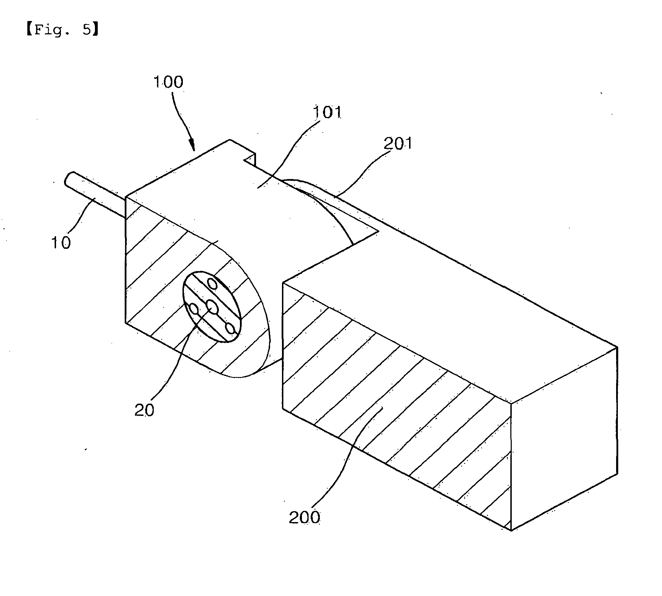

FIG. 5 is a partial side sectional view of the speed reducer and the robot joint as illustrated in FIG. 4. As shown in FIG. 5, a pair of connecting members 201 extending from an end of the rotational member 200 can be connected with outer portions of the driven gear.

Hereinafter, the operation of the speed reducer according to the first embodiment of the present invention will be simply explained.

If the driving shaft 10 rotates by receiving a driving power from a driving means, the first driving gear 11 and the second driving gear 12 installed on the same driving shaft also rotate. Continuously, the first driven gear 21 meshed with the first driving gear 11 and the second driven gear 22 meshed with the second driving gear 12 rotate, respectively. Since the driving gears 11,12 rotate in a state that they contact with an outer circumferential surface of the driven gears 21,22, respectively, the driven gears 21,22 have the same rotational direction with each other.

Since the connecting member 201 connected to the driven gears may output the same movement, the rotational member 200 can rotate by receiving a stable rotational force outputted from both side surfaces of the speed reducer 100.

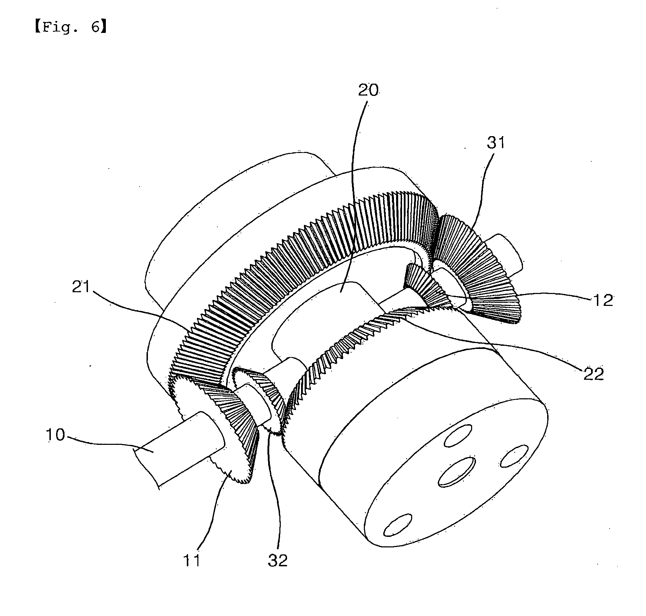

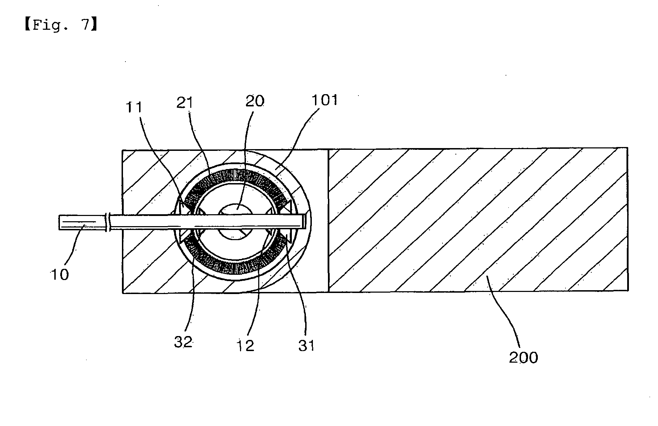

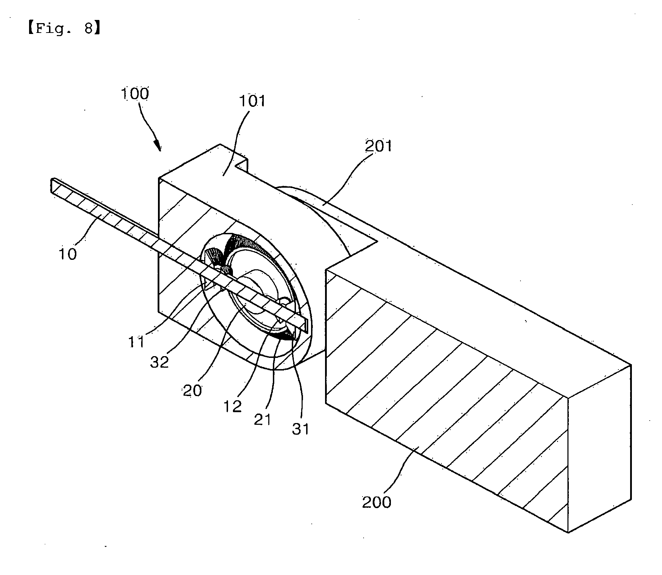

Meanwhile, FIG. 6 is an exterior perspective view of the speed reducer according to the preferred first embodiment of the present invention, for showing a state that a fluctuation prevention means is installed at the speed reducer, FIG. 7 is a sectional view of the robot joint employing the speed reducer as illustrated in FIG. 6, and FIG. 8 is a partial side sectional view of the speed reducer and the robot joint as illustrated in FIG. 7.

In the first embodiment according to the present invention, since the driving gears 11,12 rotate in a state that they contact with an outer circumferential surface of the driven gears 21,22, respectively, a stress to be biased to one side may be generated. This leads the generation of fine tremor or vibration in the speed reducer. Accordingly, it is required to employ to a means for preventing the generation of fine tremor or vibration.

In order to solve this problem, an idle gear that is a fluctuation prevention means is further installed at the driving shaft 10 so as to transmit a driving power more reliable.

The idle gear comprises a first idle gear 31 and a second idle gear 32. The first idle gear 31 has the same size as the fist driving gear 11 and it has the same gear ratio as the first driving gear 11. The first idle gear 31 is meshed with an outer circumferential surface of the first driven gear 21 so as to support the first driven gear 21 in a manner that it is opposite to the first driving gear 11 on the driving shaft 10. Likewise, the second idle gear 32 has the same size as the second driving gear 12 and it has the same gear ratio as the second driving gear 12. The second idle gear 32 is meshed with an outer circumferential surface of the second driven gear 22 so as to support the second driven gear 22 in a manner that it is opposite to the second driving gear 12 on the driving shaft 10.

The first idle gear 31 and the second idle gear 32 idling on the driving shaft 10 so that they support the driven gears 21,22, respectively. As a result, the driven gears 21,22 can be supported at both sides of the driven shaft 20 and can transmit the driving power at the same gear ratio. Consequently, this gear system can transfer more precise rotation.

In the first embodiment according to the present invention, as described above, the driving gears are installed on the driving shaft in a state that they are opposite with each other and driven gears being meshed with these driving gears are installed on the driven shaft in a state that they are opposite with each other. Due to this structure, there is no interference between the first driving gear 11 and the second driven gear 22, or between the second driving gear 12 and the first driven gear 21. This leads to the smooth power transmission of the gear system. Also, it is possible to reduce the total volume of the speed reducer and it can make more precise speed reducer.

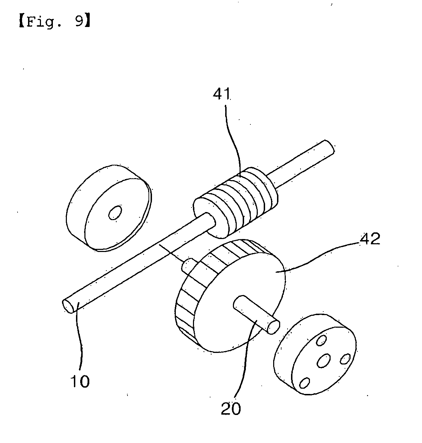

Although the driving gears and the driven gears comprise a bevel gear so as to output the rotational force in a direction perpendicular to the original direction, most of the gear which is capable of changing the direction of power transmission may be employed. For example, FIG. 9 is an exploded perspective view of a speed reducer according to another exemplarily embodiment of the present invention, for showing the driving gear and the driven gear comprise a worm screw and a worm wheel, respectively.

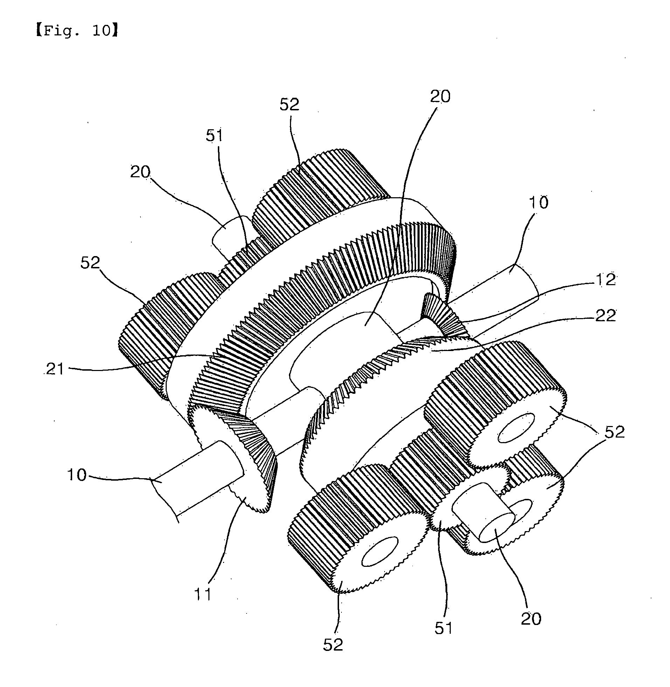

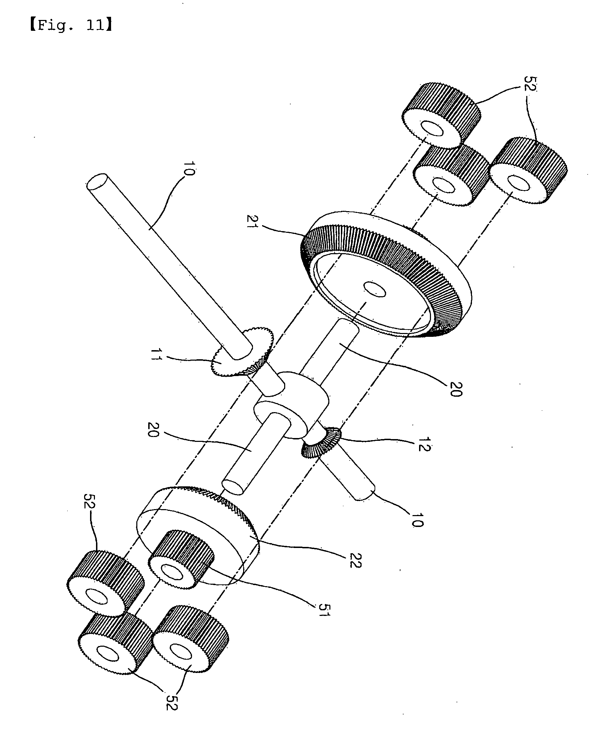

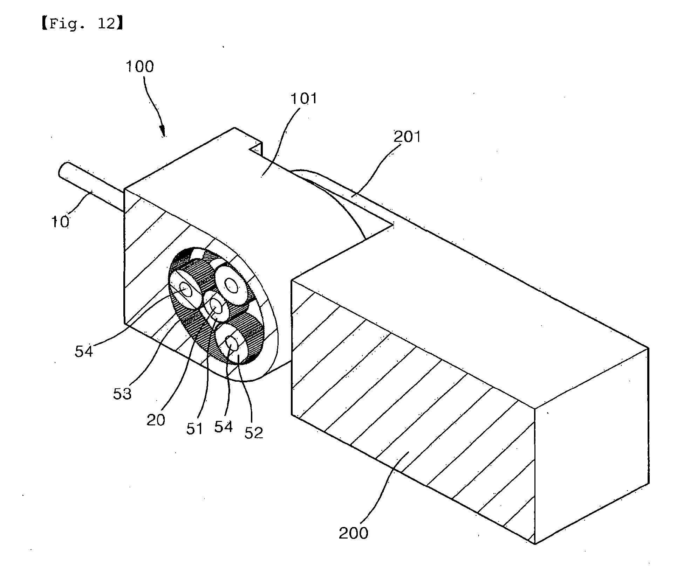

FIGS. 10 to 14 show the speed reducer according to a preferred second embodiment of the present invention. FIG. 10 is an exterior perspective view of the speed reducer, FIG. 11 is an exploded perspective view of the speed reducer as illustrated in FIG. 10, and FIG. 12 is a partial side sectional view of the speed reducer and the robot joint.

Referring to FIGS. 10 to 12, the speed reducer according to the preferred second embodiment of the present invention has the same configuration as that of the first embodiment. In other words, the speed reducer according to the preferred second embodiment of the present invention comprises the first driving gear 11 and the second driving gear 12 which comprise a bevel gear, respectively and are installed on the driving shaft 10 in a state that they are opposite to each other; the first driven gear 21 and the driven gear 22 which are installed on the driven shaft in a state that they are opposite to each other and they can be meshed with the first driving gear 11 and the second driving gear 12; and the driven shaft 20 for supporting the first driven gear 21 and the driven gear 22. The speed reducer according to the preferred second embodiment of the present invention further comprises an auxiliary speed reducing means for transmitting the slowed rotational force to further slow down.

The auxiliary speed reducing means comprises a sun gear 51 installed at the driven gear, a planetary gear 52 meshed with the sun gear 51, and a ring gear 53 meshed with the planetary gear 52. The sun gear 51 is installed on the driven shaft 20 in a state that it can rotate at outer side surface of the driven gears 21,22 as a unit.

The ring gear 53 may be directly installed in the case 101 of the speed reducer 100 as shown in the drawings. A gear shaft 54 of the planetary gear 52 is assembled and fixed to the connecting member 201 of the rotational member 200 to be coupled to the speed reducer 100.

Due to this structure, the rotational force of the first driving gear 11 and the second driving gear 12 provided by the driving shaft 10 can be transmitted to the first driven gear 21 and the second driven gear 22 to slow down, in turns, after decelerating it again by means of the auxiliary speed reducing means, it can be transmitted to the rotational member 200 coupled to the gear shaft 54 of the planetary gear 52.

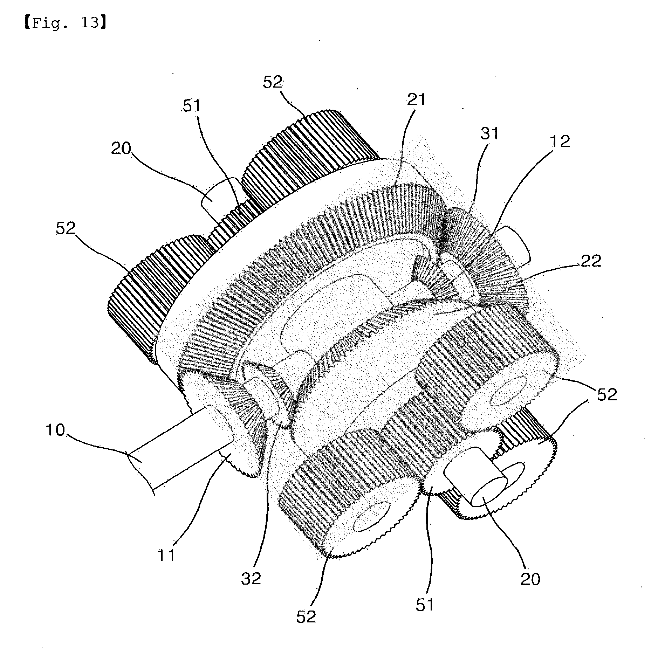

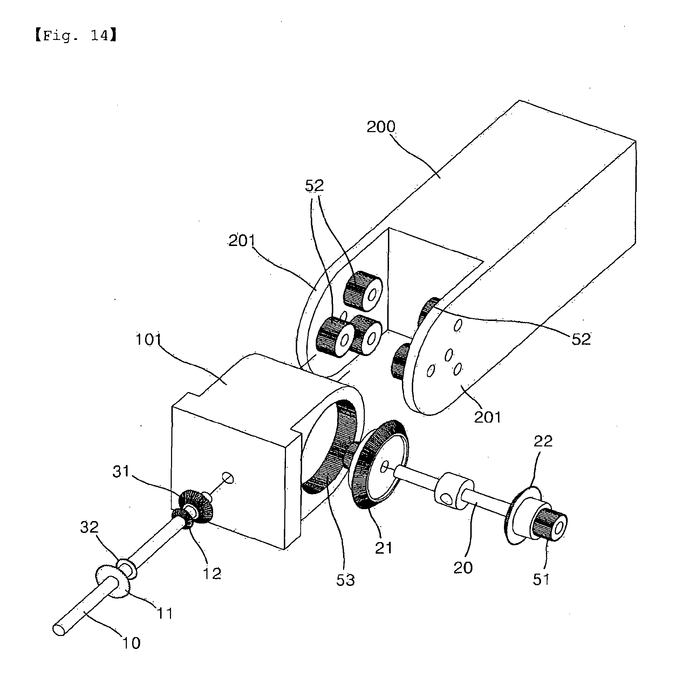

FIGS. 13 and 14 show a state that a fluctuation prevention means is installed at the speed reducer as in the first embodiment according to the present invention. As shown in FIGS. 13 and 14, the first idle gear 31 and the second idle gear 32 for supporting the first driven gear 21 and the second driven gear 22 are installed on the driving shaft 10.

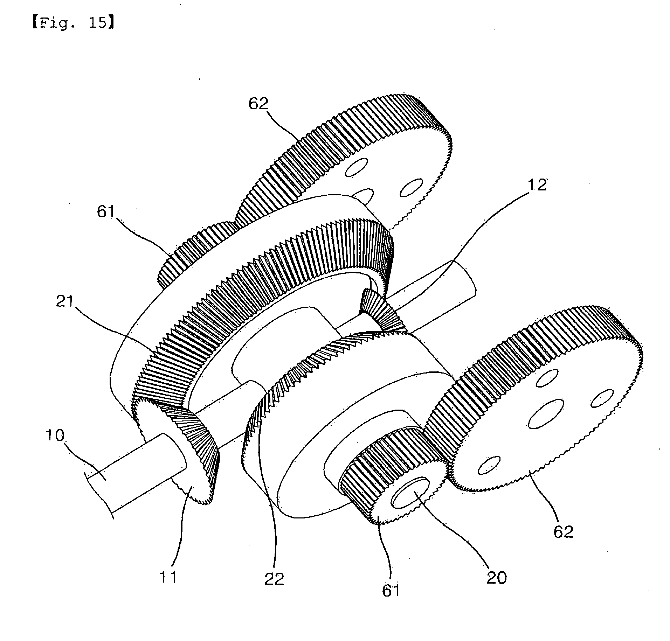

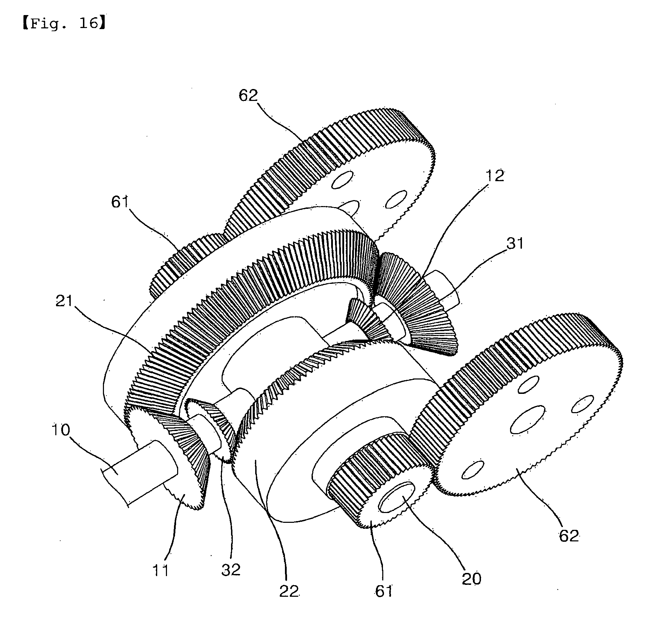

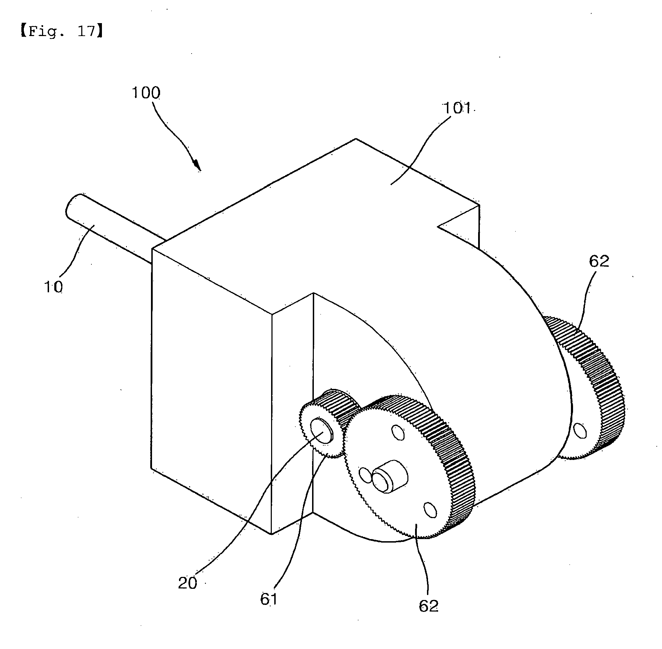

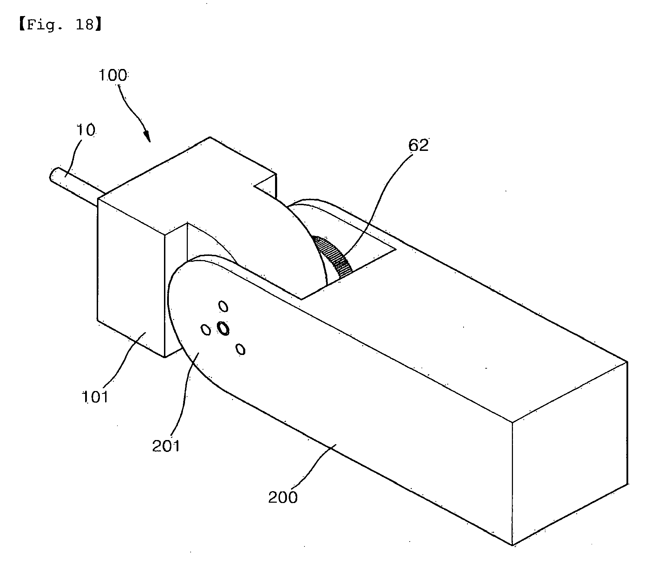

FIGS. 15 to 18 show the speed reducer according to a preferred third embodiment of the present invention. FIG. 15 is an exterior perspective view of the speed reducer, FIG. 16 is an exterior perspective view of the speed reducer, for showing a state that a fluctuation prevention means is installed at the speed reducer, FIG. 17 shows an external appearance of the speed reducer installed within a case, and FIG. 18 is an exterior perspective view of the speed reducer and the robot joint, for showing the application state that the speed reducer is installed at the robot joint.

Referring to FIGS. 15 to 18, the speed reducer according to the preferred third embodiment of the present invention has the same configuration as that of the first embodiment.

In other words, the speed reducer according to the preferred third embodiment of the present invention comprises the first driving gear 11 and the second driving gear 12 which comprise a bevel gear, respectively and are installed on the driving shaft 10 in a state that they are opposite to each other; the first driven gear 21 and the driven gear 22 which are installed on the driven shaft in a state that they are opposite to each other and they can be meshed with the first driving gear 11 and the second driving gear 12; and the driven shaft 20 for supporting the first driven gear 21 and the driven gear 22. The speed reducer according to the preferred third embodiment of the present invention further comprises an auxiliary speed reducing means for transmitting the slowed rotational force to further slow down.

The auxiliary speed reducing means comprises an output gear 61 installed on the driven shaft 20 in a manner that it may integrally formed or fixed with an outer side surface of the driven gears 21,22 as a unit, and a spur gear 62 meshed with the output gear 61.

Due to this structure, the rotational force of the first driving gear 11 and the second driving gear 12 provided by the driving shaft 10 can be transmitted to the first driven gear 21 and the second driven gear 22 to slow down, in turns, after decelerating it again by means of the spur gear 62, it can be transmitted to the rotational member 200. Appropriate number of spur gears can be added between the output gear 61 and the spur gear 62 according to the need. Furthermore, as shown in FIG. 16, it is possible to additionally install the first idle gear 31 and the second idle gear 32 can be installed on the driving shaft 10 so as to prevent fluctuation during the power transmission.

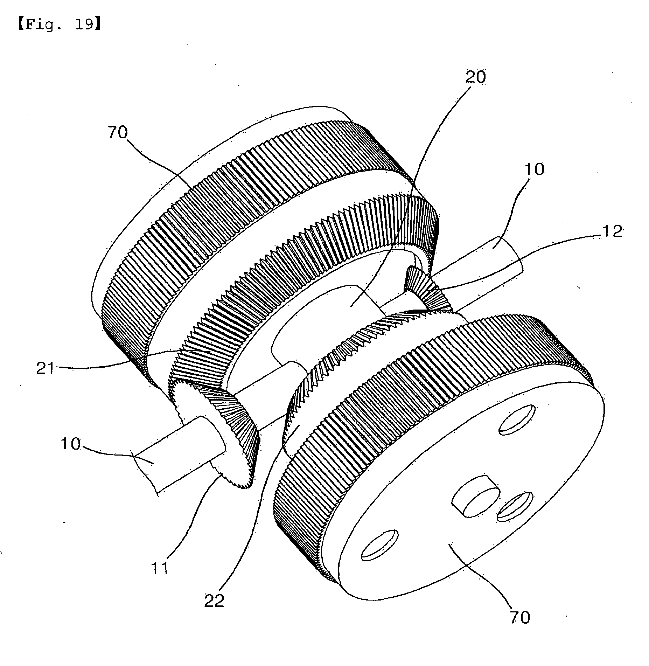

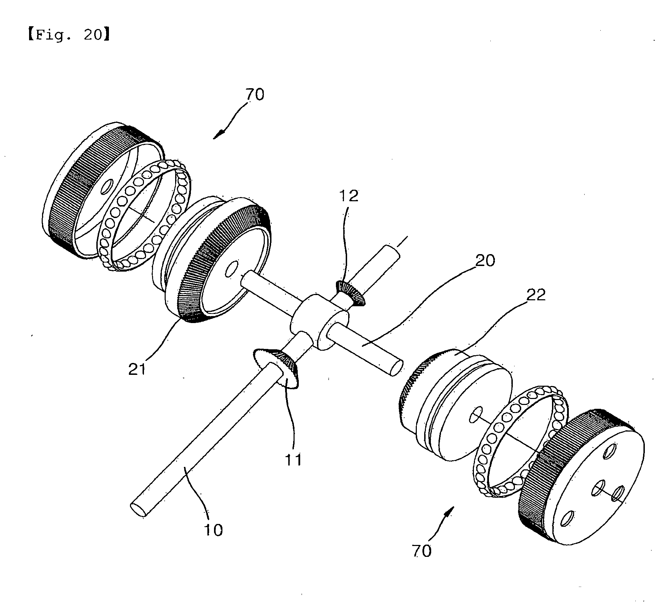

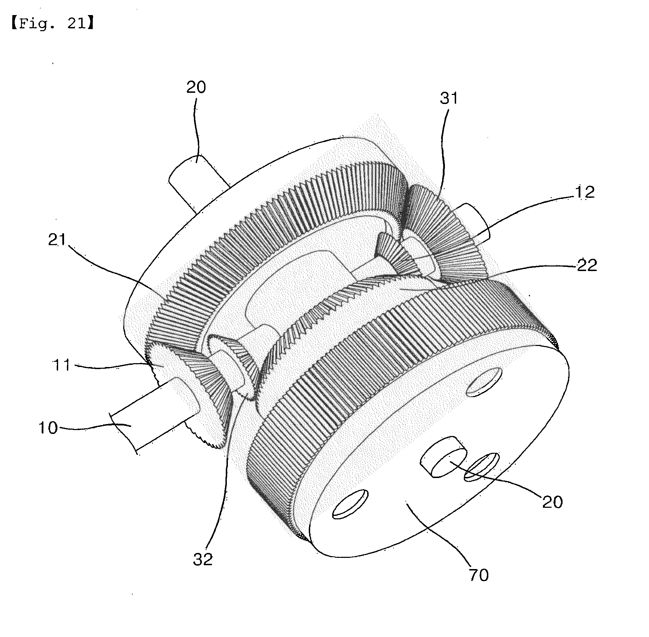

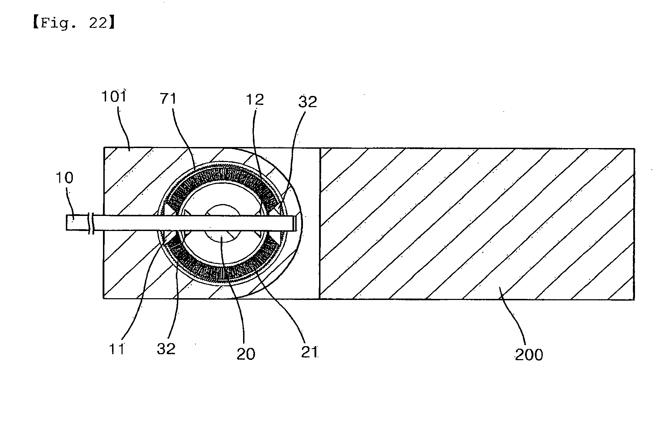

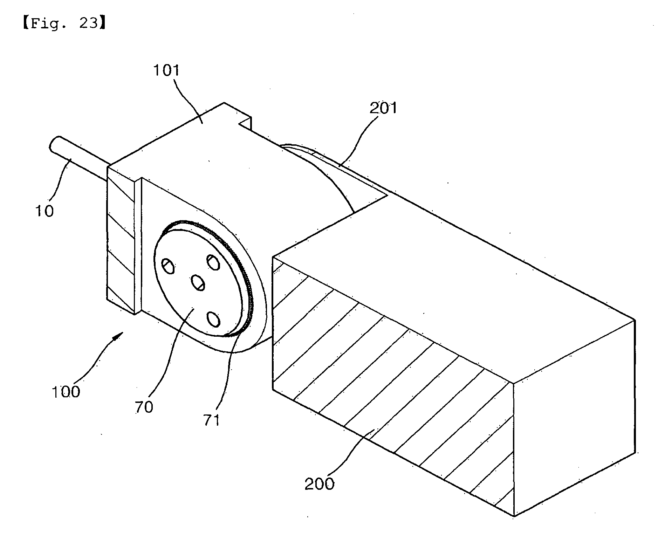

FIG. 19 is an exterior perspective view of a speed reducer according to a preferred fourth embodiment of the present invention, FIG. 20 is an exploded perspective view of the speed reducer as illustrated in FIG. 19, FIG. 21 is an exterior perspective view of the speed reducer, for showing a state that a fluctuation prevention means is installed at the speed reducer, FIG. 22 shows an application state that the speed reducer as illustrated in FIG. 21 is installed at a robot joint, and FIG. 23 is an exterior perspective view of the speed reducer and the robot joint, for showing the application state that the speed reducer according to the preferred fourth embodiment of the present invention is installed at the robot joint.

Referring to FIGS. 19 to 23, the speed reducer according to the preferred fourth embodiment of the present invention has the same configuration as that of the first embodiment.

In other words, the speed reducer according to the preferred fourth embodiment of the present invention comprises the first driving gear 11 and the second driving gear 12 which comprise a bevel gear, respectively and are installed on the driving shaft 10 in a state that they are opposite to each other; the first driven gear 21 and the driven gear 22 which are installed on the driven shaft in a state that they are opposite to each other and they can be meshed with the first driving gear 11 and the second driving gear 12; and the driven shaft 20 for supporting the first driven gear 21 and the driven gear 22. The speed reducer according to the preferred third embodiment of the present invention further comprises an auxiliary speed reducing means for transmitting the slowed rotational force to further slow down.

The auxiliary speed reducing means comprises a harmonic gear 70 installed on the driven shaft 20 in a manner that it may integrally formed or fixed with an outer side surface of the driven gears 21,22 as a unit. An internal gear 71 that is a part of the harmonic gear 70 may be directly formed at an inner side of the case 101.

Due to this structure, the rotational force of the first driving gear 11 and the second driving gear 12 provided by the driving shaft 10 can be transmitted to the first driven gear 21 and the second driven gear 22 to slow down, in turns, after decelerating it again by means of the harmonic gear 70, it can be transmitted to the rotational member 200.

Furthermore, as shown in FIG. 21 and 22, it is possible to additionally install the first idle gear 31 and the second idle gear 32 can be installed on the driving shaft 10 so as to prevent fluctuation during the power transmission.

As described above, the speed reducer according to the present invention can be applied to various instruments. For example, if the reduction gear and the rotational member are used in the joint of robot, the rotational member functions as the robot arm.

When the driving gear and the driven gear are installed on the driving shaft and the driven shaft with making a pair, they can have a different gear ratio so as to allow them to rotate at a different rotational speed.

When the driven gears are installed on the driven shaft with making a pair, one rotational member can be connected to outer side surfaces of the driven gears. Alternatively, different rotational members can be connected to the individual driven gear. Alternatively, different rotational members can be installed in a manner that they can rotate at a different rotational speed. The rotational member is installed to the driven gear in a manner that it can rotate against the driven gear at 360 degrees. Alternatively, the rotational member is eccentrically mounted to the driven shaft in a manner that it can eccentrically rotate against the driven shaft in an eccentric state.

It is to be understood that the invention is not limited in its application to the details of construction and to the arrangements of the components set forth in the above description or illustrated in the drawings.

While the invention has been described with reference to a preferred embodiment, it will be understood by those skilled in the art that various changes may be made and equivalents may be substituted for elements thereof without departing from the scope of the invention as defined in the claims.

## Claims

1. A speed reducer (100) comprising:
a driving shaft (10) driven by a driving means;
a pair of driving gears (11, 12) comprising a first driving gear (11) and a second driving gear (12), in which the first driving gear (11) and the second driving gear (12) are installed at a one end of the driving shaft (10) and are positioned facing each other, driven gears (21, 22) comprising a first driven gear (21) and a second driven gear (22), which are positioned facing each other and making a pair, in which the first driven gear (21) and the second driven gear (22) are meshed with the first driving gear (11) and the second driving gear (12), respectively and they comprise a bevel gear, respectively,
**characterized in that** the first driving gear (11) and the second driving gear (12) have a different size with the same gear ratio to the respective driven gear (21, 22);
and **characterized by**:
a driven shaft (20) for supporting the first driven gear (21) and the second driven gear (22), whereby the driving shaft (10) is installed at the driven shaft (20) in a manner that it passes through a middle portion of the driven shaft (20); and
a rotational member (200) for outputting the rotational force to slow down, the rotational member (200) being coupled to the driven gears (21, 22).

2. The speed reducer (100) as claimed in claim 1, wherein an idle gear (31,32) for supporting the other end of the driven gear (21, 22) is installed at the driving shaft (10) and is positioned facing to the driving gear (10, 11), in which the idle gear (31, 32) and the driving gear (10, 11) have a same size with the same gear ratio.

3. The speed reducer (100) as claimed in any one of claims 1 or 2, wherein the speed reducer (100) further comprises an auxiliary speed reducing means installed at the outside of the driven gear (21,22).

4. The speed reducer (100) as claimed in claim 3, wherein the auxiliary speed reducing means comprises a sun gear (51) installed at the driven gear (21,22), a planetary gear (52) meshed with the sun gear (51), and a ring gear (53) meshed with the planetary gear (52).

5. The speed reducer (100) as claimed in claim 3, wherein the auxiliary speed reducing means comprises a combination of spur gears (62).

6. The speed reducer (100) as claimed in claim 3, wherein the auxiliary speed reducing means comprises a harmonic gear (70).

7. The speed reducer (100) as claimed in claim 1, wherein the rotational member is installed to the driven gear (21, 22) in a manner that it can rotate against the driven gear (21, 22) at 360 degrees.

8. The speed reducer (100) as claimed in claim 1, wherein the rotational member is eccentrically mounted to the driven shaft (20) in a manner that it can eccentrically rotate against the driven shaft (20) in an eccentric state.

## Patentansprüche

1. Untersetzungsgetriebe (100) mit:
einer von einer Antriebseinrichtung angetriebenen Antriebswelle (10);
zwei Antriebszahnrädern (11, 12), die ein erstes Antriebszahnrad (11) und ein zweites Antriebszahnrad (12) aufweisen, wobei das erste Antriebszahnrad (11) und das zweite Antriebszahnrad (12) an einem Ende der Antriebswelle (10) und einander zugewandt angeordnet sind; getriebenen Zahnrädern (21, 22), die ein erstes getriebenes Zahnrad (21) und ein zweites getriebenes Zahnrad (22) aufweisen, die einander zugewandt angeordnet sind und ein Paar bilden, wobei das erste getriebene Zahnrad (21) und das zweite getriebene Zahnrad (22) mit dem ersten Antriebszahnrad (11) beziehungsweise dem zweiten Antriebszahnrad (12) kämmen und jeweils ein Kegelrad aufweisen,
**dadurch gekennzeichnet, dass** das erste Antriebszahnrad (11) und das zweite Antriebszahnrad (12) verschiedene Größen bei gleichem Übersetzungsverhältnis in Bezug auf das jeweilige getriebene Zahnrad (21, 22) aufweisen;
und **gekennzeichnet durch**:
eine Abtriebswelle (20) zum Stützen des ersten getriebenen Zahnrads (21) und des zweiten getriebenen Zahnrads (22), wobei die Antriebswelle (10) an der Abtriebswelle (20) derart angeordnet ist, dass sie sich **durch** eine Mittelposition der Abtriebswelle (20) erstreckt; und
ein Drehteil (200) zum Ausgeben der Drehkraft für eine Verlangsamung, wobei das Drehteil (200) mit den getriebenen Zahnrädern (21, 22) verbunden ist.

2. Untersetzungsgetriebe (100) nach Anspruch 1, bei welchem ein Zwischenrad (31, 32) zum Stützen des anderen Endes des getriebenen Zahnrads (21, 22) an der Antriebswelle (10) angebracht ist und dem Antriebszahnrad (10, 11) zugewandt angeordnet ist, wobei das Zwischenrad (31, 32) und das Antriebszahnrad (10, 11) die gleiche Größe bei gleichem Übersetzungsverhältnis aufweisen.

3. Untersetzungsgetriebe (100) nach einem der Ansprüche 1 oder 2, bei welchem das Untersetzungsgetriebe (100) ferner eine Hilfsuntersetzungsgetriebeeinrichtung aufweist, die an der Außenseite des getriebenen Zahnrads (21, 22) angebracht ist.

4. Untersetzungsgetriebe (100) nach Anspruch 3, bei welchem die Hilfsuntersetzungsgetriebeeinrichtung ein an dem getriebenen Zahnrad (21, 22) angebrachtes Sonnenrad (51), ein mit dem Sonnenrad (51) kämmendes Planetenrad (52) und ein mit dem Planetenrad (52) kämmendes Hohlrad (53) aufweist.

5. Untersetzungsgetriebe (100) nach Anspruch 3, bei welchem die Hilfsuntersetzungsgetriebeeinrichtung eine Kombination von Stirnrädern (62) aufweist.

6. Untersetzungsgetriebe (100) nach Anspruch 3, bei welchem die Hilfsuntersetzungsgetriebeeinrichtung ein Harmonic-Zahnrad (70) aufweist.

7. Untersetzungsgetriebe (100) nach Anspruch 1, bei welchem das Drehteil an dem getriebenen Zahnrad (21, 22) derart angebracht ist, dass es um 360° gegen das getriebene Zahnrad (21, 22) drehen kann.

8. Untersetzungsgetriebe (100) nach Anspruch 1, bei welchem das Drehteil exzentrisch an der Abtriebswelle (20) derart angebracht ist, dass es in einem exzentrischen Zustand exzentrisch gegen die Abtriebswelle (20) drehen kann.

## Revendications

1. Réducteur de vitesse (100) comprenant :
un arbre d'entraînement (10) mené par un moyen d'entraînement ;
une paire de pignons d'entraînement (11, 12) comprenant un premier pignon d'entraînement (11) et un deuxième pignon d'entraînement (12), dans lequel le premier pignon d'entraînement (11) et le deuxième pignon d'entraînement (12) sont installés au niveau d'une extrémité de l'arbre d'entraînement (10) et sont positionnés face à face, des pignons menés (21, 22) comprenant un premier pignon mené (21) et un deuxième pignon mené (22), qui sont positionnés face à face et constituant une paire, dans lequel le premier pignon mené (21) et le deuxième pignon mené (22) sont engrenés avec le premier pignon d'entraînement (11) et le deuxième pignon d'entraînement (12), respectivement et ils comprennent un pignon conique, respectivement,
**caractérisé en ce que** le premier pignon d'entraînement (11) et le deuxième pignon d'entraînement (12) présente une taille différente avec le même rapport d'engrenage que le pignon entraîné (21, 22) respectif ;
et **caractérisé par** :
un arbre mené (20) permettant de supporter le premier pignon mené (21) et le deuxième pignon mené (22), moyennant quoi l'arbre d'entraînement (10) est installé au niveau de l'arbre mené (20) de manière à ce qu'il passe à travers une portion milieu de l'arbre mené (20) ; et
un organe de rotation (200) permettant de fournir la force de rotation pour ralentir, l'organe de rotation (200) étant couplé aux pignons menés (21 ,22).

2. Réducteur de vitesse (100) selon la revendication 1, dans lequel un pignon fou (31, 32) permettant de supporter l'autre extrémité du pignon mené (21, 22) est installé au niveau de l'arbre d'entraînement (10) et est positionné face au pignon d'entraînement (10, 11), dans lequel le pignon fou (31, 32) et le pignon d'entraînement (10, 11) ont une même taille avec le même rapport d'engrenage.

3. Réducteur de vitesse (100) selon l'une quelconque des revendications 1 ou 2, dans lequel le réducteur de vitesse (100) comprend en outre un moyen de réduction de vitesse auxiliaire installé à l'extérieur du pignon mené (21, 22).

4. Réducteur de vitesse (100) selon la revendication 3, dans lequel le moyen de réduction de vitesse auxiliaire comprend un pignon solaire (51) installé au niveau du pignon mené (21, 22), un pignon planétaire (52) engrené avec le pignon solaire (51), et une couronne dentée (53) engrenée avec le pignon planétaire (52).

5. Réducteur de vitesse (100) selon la revendication 3, dans lequel le moyen de réduction de vitesse auxiliaire comprend une combinaison de pignons droits (62).

6. Réducteur de vitesse (100) selon la revendication 3, dans lequel le moyen de réduction de vitesse auxiliaire comprend un pignon harmonique (70).

7. Réducteur de vitesse (100) selon la revendication 1, dans lequel l'organe de rotation est installé sur le pignon mené (21, 22) de manière à ce qu'il puisse tourner entre le pignon mené (21, 22) à 360 degrés.

8. Réducteur de vitesse (100) selon la revendication 1, dans lequel l'organe de rotation est monté de façon excentrique sur l'arbre mené (20) de manière à ce qu'il puisse tourner de façon excentrique contre l'arbre mené (20) dans un état excentrique.
